# FASCICULE DE BREVET EUROPEEN

(11) **EP 1 683 696 B1**
(45) Date de publication et mention de la délivrance du brevet: **04.03.2009**
(21) Numéro de dépôt: 06290105.3
(22) Date de dépôt: 17.01.2006
(51) Int. Cl.: B60T 8/00, B62D 53/00, B60T 7/20, B60T 17/18

(54) **Système de freinage pour remorque**
Bremssystem für Anhänger
Braking system for a trailer

(30) Priorité: 21.01.2005 FR 0500620
(43) Date de publication de la demande: 26.07.2006
(73) Titulaire: Vignes, Eric, 34090 Montpellier (FR)
(72) Inventeur: Vignes, Eric, 34090 Montpellier (FR)

(56) Documents cités:
- EP-A- 1 500 531
- DE-A1- 4 202 729
- DE-A1- 10 143 888
- DE-A1- 10 261 513
- DE-U1- 20 021 110
- US-A- 5 149 121
- US-A1- 2004 141 853
- US-B1- 6 756 890

## Description

La présente invention concerne un dispositif de freinage pour les remorques et /ou les semi-remorques des classes 02, 03 et 04.Ce dispositif s'applique aux catégories suivantes : REM, SREM, RESP, SRSP, RETC, SRTC, SRAT.

Le document EP 1 500 531 A1 décrit un système de freinage pour remorque avec un valve de freinage dans lequel le commande de la suspension à air est intégré.

Le document US 5,149,121 décrit un crochet d'attelage équipé d'un capteur de force afin d'éviter la surcharge d'un remorque.

Afin d'encore plus intégrer les plusieurs fonctions liées au système de freinage et d'augmenter la sûreté des systèmes de freinage pour remorque connus, le système de freinage pour remorque selon l'invention comprend les caractéristiques de la revendication 1. Les revendications dépendantes 2-6 ont trait aux modes de réalisation préférés.

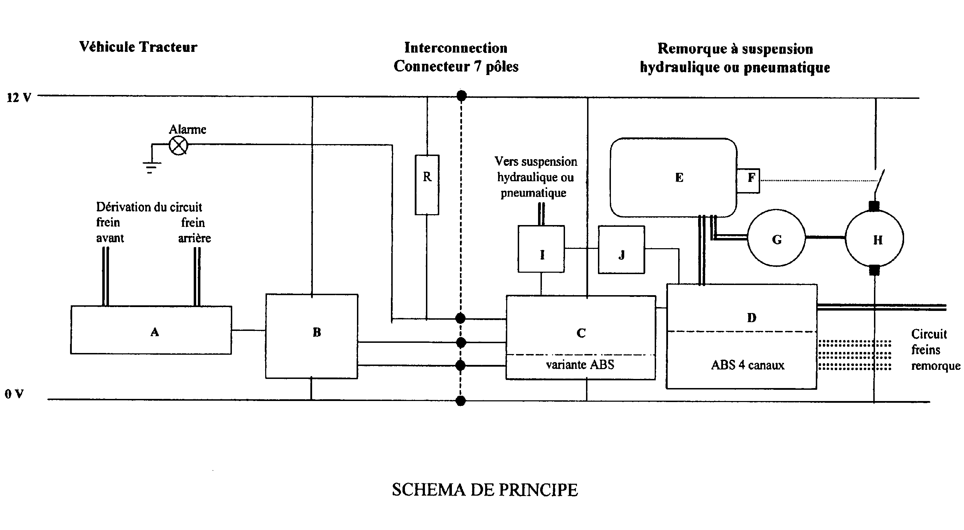

La figure est un schéma de principe montrant le système de freinage pour remorque ou semi-remorque selon l'invention.

Le véhicule tracteur est équipé d'un cylindre différentiel (A) qui mesure la différence de pression entre le circuit avant et arrière du véhicule tracteur. Cette différence de pression est proportionnelle à l'effort de freinage désiré et est utilisée comme valeur de consigne pour déterminer la force de freinage appliquée sur la remorque.

La valeur de consigne est transmise à la remorque en utilisant une boucle de courant normalisée de 2 à 40 mA générée à partir de la batterie 12V ou 24 V, du tracteur et /ou de la remorque, ou un signal électronique (B). Ce système de transmission est intrinsèquement sûr car toute ouverture du circuit entre le véhicule et la remorque est immédiatement interprété comme un défaut.

Sur la remorque, un circuit électronique (C) transforme le signal de la boucle de courant et/ou de la boucle électronique en une pression proportionnelle dans le circuit de freinage de la remorque.

Une ou des vannes proportionnelles (D) règlent la pression dans le et /ou les circuits de freinage de la remorque.

La pression hydraulique est générée par un moteur électrique (G) qui entraîne, directement ou indirectement, une pompe hydraulique (H). Le volume d'huile nécessaire est contenu sous pression dans un réservoir à membrane (E). Ce système permet de disposer d'une quantité d'huile suffisante, ajustée par un pressostat (F) comprise entre 50 et 300 bars, pour effectuer un nombre suffisant de freinages conforme à la réglementation européenne en vigueur même sans alimentation électrique de la pompe hydraulique.

Les fonctions suivantes sont indissociables :
- Le système de freinage décrit précédemment.
- un système d'optimisation et/ ou d'anti blocage de roues, sur le circuit de freinage de la remorque.
- un système de suspension hydraulique et /ou pneumatique et /ou mécanique ajustant la hauteur de caisse de la remorque
- un système interdisant le démarrage de la remorque et / ou de l'ensemble routier en cas de surcharge de celle ci et/ ou de l'ensemble routier.

Le dispositif hydraulique et /ou pneumatique et/ou mécanique, réglant la hauteur de caisse de la remorque comprend une gauge de pression proportionnelle (I) qui détermine la valeur de la charge de la remorque car cette dernière est une fonction linéaire de la pression.

En cas de surcharge de la remorque, celle ci est freinée au maximum. Cette mesure est effectuée en combinaison avec l'information obtenue à partir des roues phoniques du système d'assistance au freinage et /ou d'antiblocage des roues de la remorque afin de s'assurer que la mesure soit faite lorsque le véhicule est immobilisé.

## Revendications

1. Système de freinage pour remorque ou semi-remorque **caractérisé par le fait que** quatre fonctions, au moins, liées au système de freinage sont indissociables : le système émettant et /ou gérant le signal de freinage proportionnel à la charge remorquée(C), le système émettant et /ou gérant le signal optimisant le freinage sur la remorque(D), le système émettant et /ou gérant le signal ajustant la hauteur de caisse (I), le système émettant et /ou gérant le signal interdisant le démarrage de la remorque en cas de surcharge de cette dernière

2. Système de freinage selon la revendication 1 **caractérisé par le fait que** quatre fonctions, au moins, liées au système de freinage sont indissociables.

3. Système de freinage selon la revendication 1 **caractérisé par le fait que** le système ( C), au moins, émettant et /ou gérant le signal de freinage proportionnel à la charge remorquée, est indissociable des trois autres.

4. Système de freinage selon la revendication 1 **caractérisé par le fait que** le système ( D), au moins, émettant et /ou gérant le signal optimisant le freinage sur la remorque, est indissociable des trois autres.

5. Système de freinage selon la revendication 1 **caractérisé par le fait que** le système (I), au moins, émettant et /ou gérant le signal ajustant la hauteur de caisse, est indissociable des trois autres.

6. Système de freinage selon la revendication 1 **caractérisé par le fait que**, le système ( J ), au moins, émettant et /ou gérant le signal interdisant le démarrage de la remorque en cas de surcharge de cette dernière, est indissociable des trois autres.

## Claims

1. Breaking system for trailer or semitrailer which is **characterized by** the fact that four functions at least, in contact with the breaking system are indissociable: the system which transmit and /or manage the "breaking signal" proportional to the load hauled(C ), the system which transmit and /or manage the "optimizing signal" of the breaking system on the trailer ( D), the system which transmit or/and manage the "adjusting signal" for the high of trailer body (I)**,** the system which transmit or/and manage the signal which forbid the starting of the trailer, if this one is in overload.

2. Breaking system in accordance with the claim number 1, **characterized by** the fact that four functions, at least, connected with the breaking system are indissociable.

3. Breaking system in accordance with the claim number 1, **characterized by** the fact that the system (C), at least, which transmit and /or manage the "breaking signal" which is proportional to the load hauled is indissociable of the three others.

4. Breaking system in accordance with the claim number 1, **characterized by** the fact that the system (D), at least, which transmit and /or manage the optimization of the «breaking signal" on the trailer is indissociable with the three others.

5. Breaking system in accordance with the claim number 1, **characterized by** the fact that the system (I), at least, which transmit and /or manage the "adjusting signal" for the high of trailer body, is indissociable with the three others.

6. Breaking system in accordance with the claim number 1, **characterized by** the fact that the system (J), at least, which transmit and /or manage the signal which forbid the starting of the trailer if this one is in overloading, is indissociable with the three others.

## Patentansprüche

1. Bremssystem fuer Anhaenger oder Sattelhaenger der dadurch charakterisiert ist, dass mindestens vier Funktionen, die mit dem Bremssystem zusammenhaengen, gekoppelt sind : das System , das das Bremssignal proportional zur gezogenen Last aussendet/steuert (C), das System, das das Signal zur Optimierung der Bremsleistung am Haenger aussendet/steuert (D), das System, das das Signal der Kastenhoehe aussendet/steuert (I), das System, das das Anfahren des Haengers bei Ueberladung verhindert, steuert/aussendet.

2. Bremssystem erste Geltendmachung charakterisiert durch die Tatsache, dass mindestens vier Funktionen des Bremssystems gekoppelt sind.

3. Bremssystem erste Geltendmachung charakterisiert durch die Tatsache dass das System (C), zumindest, ein Signal aussedet oder steuert, welches proportional zur Zuglast steht, und gekoppelt ist mit den drei anderen Systemen.

4. Bremssystem ersteGeltendmachung charakterisiert durch die Tatsache, dass das System (D), das ein Signal zur Optimisierung der Bremseigenschaften des Anhaengers ausseindet/steuert, zumind mit den drei anderen Systemen gekoppelt ist.

5. Bremssystem erste Geltendmachung charakterisiert durch die Tatsache, das ein Signal zur Hoeheneinstellung des Kasten aussendet/steuert, mit den drei anderen gekoppelt ist.

6. Bremssystem erste Geltendmachung charakterisiert durch die Tatsache, das System (J), zumindest, das ein Signal zur Anfahrverhinderung bei Ueberladung steuert/aussendet, gekoppelt ist mit den drei anderen.
